# EUROPÄISCHE PATENTSCHRIFT

(11) **EP 0 858 732 B1**
(45) Veröffentlichungstag und Bekanntmachung des Hinweises auf die Patenterteilung: **17.07.2002**
(21) Anmeldenummer: 98102339.3
(22) Anmeldetag: 11.02.1998
(51) Int. Cl.: A01D 75/28

(54) **Erntemaschine mit Seitengangausgleich**
Harvesting machine with compensation means for hillside working
Machine de récolte munie de moyens de compensation pour le travail sur une pente

(30) Priorität: 14.02.1997 DE 19705583
(43) Veröffentlichungstag der Anmeldung: 19.08.1998
(60) Teilanmeldung: 02100254.8
(73) Patentinhaber: DEERE & COMPANY, Moline, Illinois 61265-8098 (US)
(72) Erfinder: Scheid, Heinrich, 66440 Blieskastel (DE)
(74) Vertreter: Magin, Ludwig Bernhard

(56) Entgegenhaltungen:
- EP-A- 0 736 244
- FR-A- 1 136 449
- US-A- 2 753 675
- US-A- 3 731 470
- TEBRÜGGE: "HANGMÄHDRESCHER AUS TECHNISCHER UND ÖKONOMISCHER SICHT" LANDTECHNIK, Bd. 34, Nr. 6, Juni 1979, HANNOVER, Seiten 282-286, XP000577031

## Beschreibung

Die Erfindung betrifft eine Erntemaschine mit einer Hangausgleichsvorrichtung mit einem Schwenklager, einem Getriebegehäuse und einem Hydraulikzylinder.

Die DE-A1-41 31 433 offenbart eine Hangausgleichsvorrichtung z. B. für einen Mähdrescher, die eine an dem Mähdrescherrahmen befestigte Konsole und einen Schwenkarm enthält, der ein Endantriebsgehäuse vertikal schwenkbar in der Konsole lagert. Der Schwenkarm enthält einen ersten mit dem Endantriebsgehäuse angeschraubten Schenkel und einen zweiten als Hülse ausgebildeten Schenkel, der in der Konsole drehbar aufgenommen ist. Von dem mit dem Endantriebsgehäuse verbundenen Schenkel erstreckt sich ein Zapfen fort, der der Verbindung mit einem Hydraulikzylinder dient. Zwischen dem Schwenkarm und der Konsole erstreckt sich im wesentlichen waagrecht der Hydraulikzylinder, der den Schwenkarm mit dem Endantriebsgehäuse vertikal schwenkt. Das Endantriebsgehäuse besteht aus einem Gußgehäuse und einem Deckel, die in einer quer zur Fahrtrichtung des Fahrzeugs verlaufenden Trennebene miteinander verbunden werden können. Der Schwenkarm ist mit einem Schenkel an das Gußgehäuse angeschraubt.

In einer anderen Bauweise wird ein zweiteiliges Getriebegehäuse verwendet, bei dem die Trennebene in der Fahrtrichtung verläuft, wobei der Schwenkarm an dem der Fahrzeugmitte zugelegenen Teil angeschraubt ist. Bei diesem Ausführungsbeispiel wird die Radnabe in beiden Teilen des Getriebegehäuses drehbar gelagert.

Es ist das Ziel der Erfindung eine alternative Ausführungsform einer Hangausgleichsvorrichtung zu entwickeln.

Dieses Ziel wird erfindungsgemäß durch die Lehre des Patentanspruchs 1 erreicht, wobei in den weiteren Patentansprüchen Merkmale aufgeführt sind, die die Lösung in vorteilhafter Weise weiterentwickeln.

Auf diese Weise kann auf den Schwenkarm verzichtet und sowohl die Hülse wie auch der Dorn bereits in dem Getriebegehäuse integriert werden. Die Verwendung eines Getriebegehäuses mit einer in der Fahrtrichtung verlaufenden vertikalen oder im wesentlichen vertikalen Trennebene macht es möglich, dessen dem Rahmen des Fahrzeugs zugelegenen Teil so auszubilden, daß er trotz der Verbindung mit der Hülse gegebenenfalls auch mit dem Dorn schmiede- oder gußtechnisch ausführbar ist; besteht das Getriebegehäuse, wie in der DE-A1-41 31 433 gezeigt, im wesentlichen aus einem großen tiefen Gußgehäuse, ist der Kraftfluß zu unbestimmt, als daß das Angießen, Ausschmieden oder Anschrauben des Schwenklagers und des Dorns fertigungstechnisch in Betracht käme. Der betreffende Teil des Getriebegehäuses kann im günstigsten Fall als eine Platte oder Glocke evtl. mit Versteifungsrippen ausgebildet sein, die sogar in einem Schmiedevorgang hergestellt werden kann. Eine weniger günstige aber mögliche Ausführungsform ist darin zu sehen, daß die Hülse nicht in einer Büchse, sondern auf einer Welle drehbar gelagert ist. Die sich aus der Lage des Hydraulikzylinders im wesentlichen innerhalb der vertikalen Erstreckung des Schwenklagers ergebende mehr horizontale als vertikale Lage des Hydraulikzylinders ermöglicht es, das Schwenklager unterhalb des Rahmens der Erntemaschine anzubringen, wodurch dessen Baubreite gering gehalten wird.

Wenn die Hülse und/oder der Dorn nicht einstückig mit dem zweiten Teil verbunden ist/sind, sondern an diesen angeschraubt oder sonstwie daran angeschlossen ist, kann der zweite Teil noch einfacher hergestellt werden, wobei in dem Anschlußbereich der Hülse und/oder des Dorns entsprechende Material-verstärkungen, z. B. Wulste, Kragen vorgesehen werden, die eine günstige Krafteinleitung sicherstellen.

Eine dauerhafte Positionierung der Hülse in dem zweiten Teil wird durch eine Sackbohrung und Schrauben gewährleistet, die die Hülse in dieser halten.

Je nach den zu erwartenden Festigkeitsanforderungen und den zur Verfügung stehenden Werkzeugmaschinen kann die Hülse und gegebenenfalls der Dorn auch direkt an den zweiten Teil angegossen oder ausgeschmiedet werden, so daß ein einheitliches Bauteil mit kontinuierlichen Kraftflußübergängen geschaffen wird.

Wenn die Eingangswelle in einem über den ersten Teil hinausragenden Bereich des zweiten Teils gelagert ist, und zwar vorteilhafterweise doppelt, kann lediglich durch den Austausch nur des zweiten Teils ein anderes Getriebegehäuse geschaffen, und die Untersetzung sowie der für das Schwenkmaß bedeutende Abstand zwischen den Mittenachsen der Ein- und Ausgangswelle verändert werden, ohne daß der erste Teil hiervon betroffen ist.

Die Dichtigkeit und die Festigkeit des zweiten Teils des Getriebegehäuses werden weiterhin gewahrt, wenn der Dorn zur Anlenkung des Hydraulikzylinders in einem Wandungsbereich des zweiten Teils untergebracht ist, der über den ersten Teil hinausreicht und diesen somit nicht beeinträchtigt.

In der Zeichnung ist ein nachfolgend näher beschriebenes Ausführungsbeispiel der Erfindung dargestellt. Es zeigt:
- Fig. 1: eine erfindungsgemäße Erntemaschine mit einer Hangausgleichsvorrichtung in Seitenansicht,
- Fig. 2: die Hangausgleichsvorrichtung in Draufsicht,
- Fig. 3: die Hangausgleichsvorrichtung in Seitenansicht,
- Fig. 4: einen Längsschnitt durch ein Getriebegehäuse und
- Fig. 5: das Getriebegehäuse aus Figur 4 in Seitenansicht.

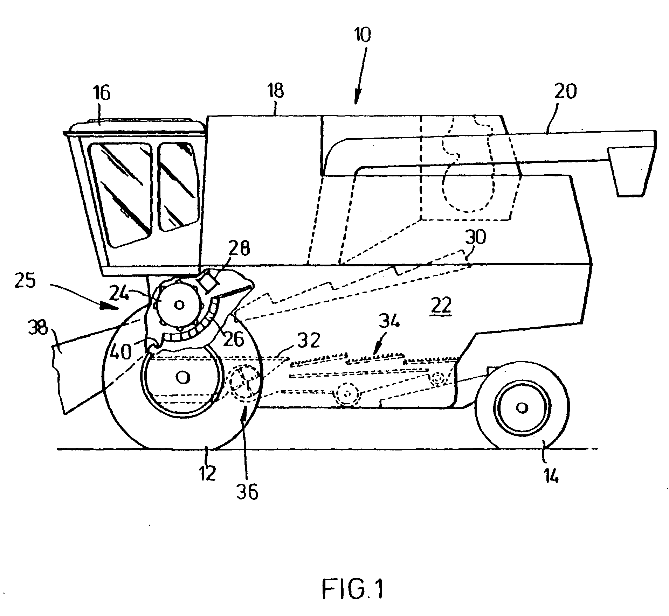

Eine in Figur 1 gezeigte Erntemaschine 10 in der Form eines Mähdreschers ist auf vorderen angetriebenen und rückwärtigen lenkbaren Laufrädern 12 bzw. 14 getragen und weist eine Fahrerkabine 16 auf, von der aus sie von einem Fahrer bedient werden kann. Anstatt eines Mähdreschers könnte ebenso ein Feldhäcksler, ein selbstfahrender Roder, ein Schwadmäher oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

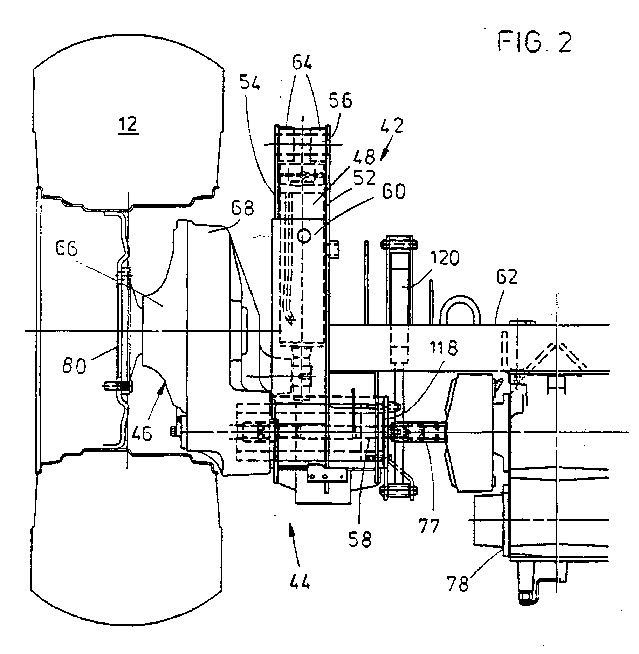

Figur 2 zeigt einen Ausschnitt der Erntemaschine 10 mit einer Hangausgleichsvorrichtung 42, die ein Schwenklager 44 enthält, in der ein Getriebegehäuse 46 vertikal schwenkbar gelagert ist, wobei die Schwenkbewegung mittels eines Hydraulikzylinders 48 ausgeführt wird.

Die Hangausgleichsvorrichtung 42 ist an jeder Seite der Erntemaschine 10 vorgesehen und dient dazu, diese beim Arbeiten am Hang, oder bei einer ungleichmäßigen Verteilung des Ernteguts auf den Sieben 34 nach der Waagrechten auszurichten oder so zu stellen, daß sich das Erntegut auf den Sieben 34 gleichmäßig verteilt. In der Zeichnung ist nur die linke Hangausgleichsvorrichtung 42 dargestellt. Zur Steuerung der Hangausgleichsvorrichtung 42, d. h. des Hydraulikzylinders 48, wird eine nicht gezeigte Steuer- oder Regelvorrichtung benutzt, die aus der Neigung der Erntemaschine 10 oder der ungleichmäßigen Verteilung des Ernteguts ein Signal bildet, das ein Aus- oder Einfahren des Hydraulikzylinders 48 bewirkt. Ein weiterer nicht gezeigter Bestandteil der Hangausgleichsvorrichtung 42 ist eine Schwenkvorrichtung für eine Erntegutbergungsvorrichtung, z. B. ein Schneidwerk, ein Maisgebiß oder einen Maispflücker, die diese abhängig von der Stellung des Getriebegehäuses 46 oder des Hydraulikzylinders 48 stets parallel zum Boden führt.

Das Schwenklager 44 wird in diesem speziellen Ausführungsbeispiel aus einer inneren Wand 52 und einer äußeren Wand 54 gebildet, die parallel zueinander und vertikal verlaufen und in ihrem vorderen in Figur 2 oben gelegenen Bereich mittels eines Bolzens 56, in ihrem rückwärtigen in Figur 2 unten gelegenen Bereich mittels einer Büchse 58 und in ihrem oberen Bereich mittels einer Platte 60 miteinander verbunden sind. Der Abstand der Wände 52 und 54 ist so groß, daß der Hydraulikzylinder 48 zwischen ihnen aufgenommen werden kann. In ihrem unteren Bereich ist das Schwenklager 44 offen, so daß sich der Hydraulikzylinder 48 vertikal zwischen den beiden Wänden 52 und 54 bewegen und wenigstens teilweise nach unten heraustreten kann. Das Schwenklager 44 ist insbesondere mittels seiner inneren Wand 52 an ein Achsrohr 62 der Erntemaschine 10 angeschweißt. Alternativ kann das Schwenklager 44 auch an deren Rahmen 22 direkt befestigt sein. Schließlich kann das Schwenklager 44 an sich oder mit dem Achsrohr 62 austauschbar gestaltet sein, so daß aus der für den Hang tauglichen Erntemaschine 10 eine gebildet werden kann, die nur auf der Ebene einsetzbar ist. Insofern wird ausdrücklich auf das in der WO-A1-9305640 Offenbarte Bezug genommen, das insofern hiermit einbezogen wird.

Der Bolzen 56 erstreckt sich durch entsprechende Öffnungen in beiden Wänden 52 und 54 und ist dort durch herkömmliche Mittel lagegesichert. Die Wände 52 und 54 können in dem Bereich der Öffnungen Verstärkungen aufweisen oder auf den Bolzen 56 können Distanzbüchsen 64 aufgesetzt sein, die einen Zwischenraum belassen, in dem ein Ende des Hydraulikzylinders 48, und zwar insbesondere dessen zylinderseitiges Ende, schwenkbar auf dem Bolzen 56 aufgenommen werden kann. Die Längsmittenachse des Bolzens 56 verläuft quer zur Fahrtrichtung der Erntemaschine 10; sollte anstatt des Bolzens 56 ein Kugelzapfen oder dergleichen verwendet werden, ist dieser so auszurichten bzw. anzuordnen, daß der aufgenommene Hydraulikzylinder 48 in der beschriebenen Weise schwenken kann.

Die Büchse 58 durchdringt ebenfalls beide Wände 52, 54 in geeigneten Öffnungen und ist mit diesen verschweißt. Die Büchse 58 ist als Gleitlager ausgebildet und hat einen Innendurchmesser von ca. 200 mm. Alternativ kann die Büchse 58 auch zur Aufnahme von Kugel- oder sonstigen Rollenlagern ausgebildet sein und/oder an die Wände 52, 54 angeschraubt werden. Die Büchse 58 kann auf der einen oder anderen Seite der Wände 52, 54 oder auf beiden Seiten über diese überstehen oder auch bündig mit diesen abschließen.

Die Längsmittenachse der Büchse 58 verläuft senkrecht zu den Wänden 52, 54, jedenfalls aber quer zur Fahrtrichtung der Erntemaschine 10.

Die Platte 60 stellt eine Schweißverbindung beider Wände 52, 54 her und kann auch zur Verbindung mit dem Rahmen 22 der Erntemaschine 10 verwendet werden. Es ist ausreichend, wenn sich die Platte über eine Teillänge der Wände 52, 54 erstreckt.

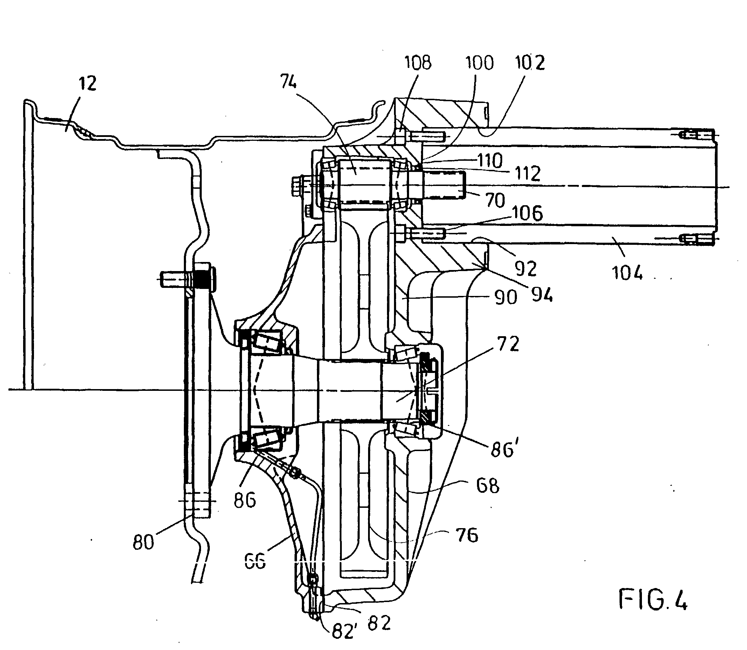

Das Getriebegehäuse 46 setzt sich aus einem ersten äußenliegenden Teil 66 und einem zweiten innenliegenden Teil 68 zusammen, die an einer vertikal und in der Fahrtrichtung verlaufenden Trennebene miteinander verschraubt sind. Das Getriebegehäuse 46 nimmt ein Untersetzungsgetriebe in Stirnrad- oder Planetenbauweise auf. In Figur 4 ist zu erkennen, daß das Getriebe eine Eingangswelle 70 und eine Ausgangswelle 72 aufweist, wobei auf der Eingangswelle 70 ein kleines Ritzel 74 und auf der Ausgangswelle 72 ein großes Zahnrad 76 drehfest befestigt ist, die miteinander kämmen und eine Drehzahluntersetzung bewirken. Die Drehachsen der Eingangs- und der Ausgangswelle 70 und 72 verlaufen in diesem Ausführungsbeispiel parallel zueinander. Zur Lagerung der Eingangs- und Ausgangswelle 70 und 72 sind in beiden Teilen 66, 68 des Getriebegehäuses 46 nicht näher bezeichnete Kegelrollenlager vorgesehen, wobei die Eingangswelle 70 nur in dem zweiten Teil 68 und die Ausgangswelle 72 in dem ersten und in dem zweiten Teil 66 und 68 drehbar gelagert ist. Die Eingangswelle 70 ist mittels einer Welle 77 mit einem Getriebe 78 antriebsmäßig verbunden, und die Ausgangswelle 72 enthält einen Flansch 80, an den ein Laufrad 12 angeschraubt werden kann. Danach erfolgt ein Antrieb des Laufrades 12 von einem nicht dargestellten Motor über das Getriebe 78, die Welle 77, die Eingangswelle 70, das Ritzel 74, das Zahnrad 76 und die Ausgangswelle 72.

Gemäß Figur 4 ist der erste Teil 66 teller- oder schüsselartig ausgebildet und endet außen mit einer Lagerbohrung 86 in einem Lagergehäuse für die Ausgangswelle 72 und innen in einem Ringflansch 82 zur Befestigung an dem zweiten Teil 68.

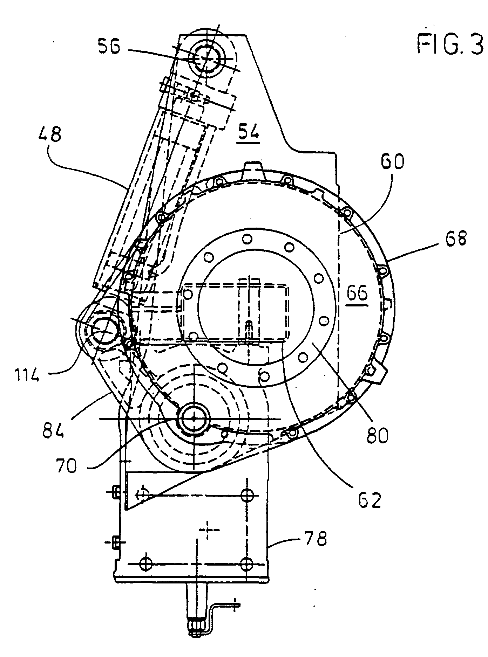

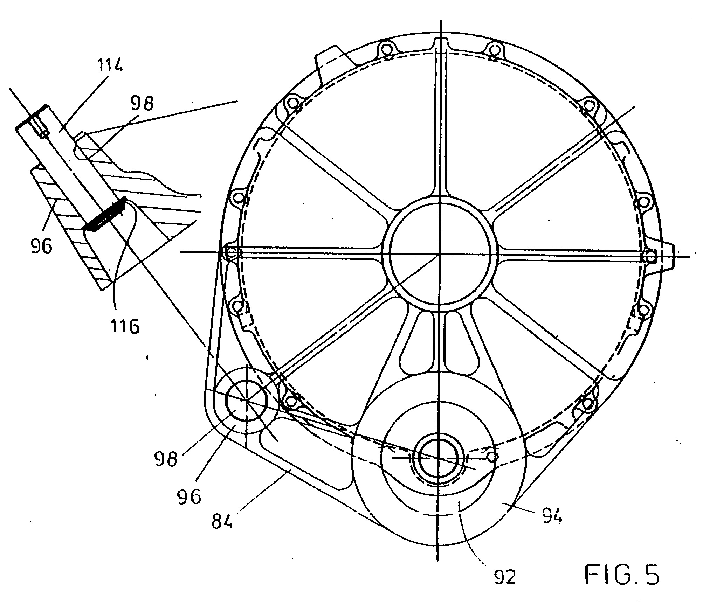

Der zweite Teil 68 ist insbesondere auch mit Blick auf Figur 5 in der Vorderansicht im wesentlichen rund und topfförmig ausgebildet, wobei in einem mit Blick auf Figur 3 und 5 unteren Bereich ein Ansatz 84 einstückig angeformt, insbesondere angegossen oder ausgeschmiedet ist, der über die Kreisfläche übersteht. An dem mit Blick auf Figur 4 linken Ende läuft der zweite Teil 68 in einem Ringflansch 82' aus, der so ausgebildet ist, daß er mit dem Ringflansch 82 des ersten Teils 66 dichtend verschraubt werden kann. Ungefähr mittig des zweiten Teils 68 ist eine Lagerbohrung 86' zur Aufnahme des rechten oder inneren Lagers der Ausgangswelle 72 vorgesehen, wobei im montierten Zustand diese Lagerbohrung 86, die Ausgangswelle 72, deren Lager und die Lagerbohrung 86' in dem ersten Teil 66 koaxial zu einer gemeinsamen Achse, nämlich der Drehachse der Ausgangswelle 72 angeordnet sind. Die Erstreckung des zweiten Teils 68 zwischen dem Ringflansch 82' und einer die Lagerbohrung 86' enthaltenden Wandung 90, die mit nicht näher bezeichneten Stegen und Rippen versteift ist, entspricht im wesentlichen der Breite des Zahnrades 76 und ist somit relativ gering.

Im Bereich des Ansatzes 84, der tangential von zwei Stellen des Umfangs der Wandung 90 ausgeht und ungefähr eine Trapezform einnimmt, sind eine Ausnehmung 92 in der Fcrm einer Sackbohrung mit einem Kragen 94 und ein Gußauge 96 mit einer Ausnehmung 98 in der Form einer Bohrung vorgesehen.

Der Ansatz 84 und die Wandung 90 sind einstückig als Gußteil oder als Schmiedeteil ausgebildet, was erst durch die offene Topfform mit geringer axialer Erstreckung und ohne oder im wesentlichen ohne Hinterschnitte möglich ist.

Die Ausnehmung 92 ist im Bereich der größten Materialstärke des zweiten Teils 68 vorgesehen und enthält einen Boden 100 und eine Innenwand 102, die jeweils der Anlage und Aufnahme einer Hülse 104 dienen. Die Ausnehmung 92 ist so bemessen, daß die Hülse 104 ausreichend fest gegen Biegung und spielfrei aufgenommen wird. Zur Befestigung der Hülse 104 sind in ihr von der in der Ausnehmung 92 aufgenommenen Stirnseite ausgehende Gewindebohrungen 106 vorgesehen, in die die Wandung 90 im Randbereich des Bodens 100 durchdringende Schrauben 108 eingeschraubt werden können. Alternativ könnte die Hülse 104 auch mit einer reibschlüssigen Verbindung in der Ausnehmung 92 gehalten oder in diese eingeschweißt werden. Der Boden 100 weist eine Bohrung 110 auf, die dem Durchtritt der Eingangswelle 70 in die Ausnehmung 92 dient und eine Dichtung 112 enthält, die einen Durchtritt von in dem Getriebegehäuse 46 enthaltenem Schmiermittel verhindert. Die Längsmittenachse der Ausnehmung 92, der Hülse 104, der Eingangswelle 70 und deren Lager und der Bohrung 110 ist diesselbe, d. h. diese Komponenten sind koaxial zueinander angeordnet. Die Lagerung der Eingangswelle 70 und die Unterbringung des Ritzels 74 wird so gelöst, daß der Ansatz 84 in dem betreffenden Bereich im Falle einer Gußfertigung einen Kern enthält, während bei einer Fertigung durch Schmieden dieser Bereich als Vollmaterial belassen wird, in das eine Nische eingefräßt wird. Nach einer anderen und dargestellten Version wird eine Platte gegenüber der Wandung 90 angeschraubt, die die Eingangswelle 70 einenends drehbar aufnimmt.

In einem anderen Eckbereich des Ansatzes 84 und zwar mit Blick auf Figur 5 ungefähr um 50 Grad versetzt, befindet sich das Gußauge 96 mit der Ausnehmung 98 und zwar im wesentlichen außerhalb der Kreisfläche, während der Kragen 94 von der Kreislinie im wesentlichen mittig geschnitten wird. Die Ausnehmung 98 in dem Gußauge 96 ist dazu bestimmt, einen Dorn 114 aufzunehmen und lagefest zu halten. Der Dorn 114 ragt in dem dargestellten Ausführungsbeispiel um ca. ein Drittel seiner Länge über das Gußauge 96 hinaus und wird in dem Gußauge 96 mittels eines Sicherungsrings 116 axial gehalten. Zusätzlich kann der Dorn 114 eingepreßt werden, also reibschlüssig gehalten werden. Der Dorn 114, dessen Mittenachse den größten Abstand zu der Mitte des zweiten Teils 68 und somit zu der Drehachse der Ausgangswelle 72 aufweist, dient der Aufnahme des kolbenstangenseitigen Endbereichs des Hydraulikzylinders 48 und erstreckt sich somit in der Richtung der Hülse 104 bis in den Zwischenraum zwischen der inneren und der äußeren Wand 52 und 54 des Schwenklagers 44. Der Dorn 114 kann auch einstückig an den zweiten Teil 68 angeformt werden.

Die Hülse 104 ist zur Aufnahme in der Büchse 58 des Schwenklagers 44 bestimmt und stellt somit den zweiten Teil des Gleitlagers dar. Der Außendurchmesser der Hülse 104 und der Innendurchmesser der Büchse 58 sind so aufeinander abgestimmt, daß eine relativ geringe Toleranz für eine Gleitpassung verbleibt. Es ist auch möglich, Lagerhülsen aus Lagermetall zwischen beide einzufügen, die die Gleiteigenschaft erhöhen. In einer herstellungstechnisch einfachen und dargestellten Version ist die Hülse 104 auf ihrer gesamten Länge mit dem gleichen Innen- und Außendurchmesser ausgestattet, d. h. der Innendurchmesser der Ausnehmung 92 entspricht im wesentlichen dem der Büchse 58, wobei die Toleranzen für die Preß- und die Gleitpassung vernachlässigt werden. Die Gesamtlänge der Hülse 104 ist etwas größer als die Tiefe der Ausnehmung 92 und die Länge der Büchse 58. Auf dem im montierten Zustand überstehenden Endbereich der Hülse 104 ist eine Anschlagplatte 118 befestigt, die eine Axialbewegung der Hülse 104 in der Büchse 58 verhindert. Mit der Anschlagplatte 118 ist in bekannter Weise ein Nehmerzylinder 120 verbunden, der der Steuerung der Schrägstellung der Erntebergungsvorrichtung dient. Die Hülse 104 könnte alternativ auch an die Wandung 90 angegossen werden.

Der Hydraulikzylinder 48 ist doppelwirkend ausgeführt und wird von der vorerwähnten Steuer- oder Regelvorrichtung entsprechend beaufschlagt. Die Anordnung des Hydraulikzylinders 48 ist so gewählt, daß er sich im wesentlichen horizontal erstreckt. Im dargestellten Ausführungsbeispiel liegen die Längsmittenachse des Bolzens 56 und der Hülse 104 auf einer Ebene, die im wesentlichen parallel zum Boden oder einer sonstigen Aufstandsfläche der Erntemaschine 10 verläuft. Wenn es auch hinsichtlich der Unterbringung des Schwenklagers 44 unter den Rahmen 22 der Erntemaschine 10 sehr günstig ist, wenn die Schwenkachsen des Hydraulikzylinders 48 und der Hülse 104 in dem Schwenklager 44 im wesentlichen in einer Ebene liegen, so kann diese Ebene auch geneigt verlaufen, und zwar solange, als sich der Anlenkpunkt des Hydraulikzylinders 48 an dem Schwenklager 44 noch unterhalb dessen oberster Kante befindet, was bei einer Neigung von ca. 45 Grad noch erreicht werden wird. In Figur 2 nimmt das Getriebegehäuse 46 seine obere Endstellung ein, in der der Hydraulikzylinder 48 vollkommen eingefahren ist. In dieser Stellung befindet sich der Anlenkpunkt des Hydraulikzylinders 48 an dem Getriebegehäuse 46 geringfügig unterhalb der vorgenannten Ebene durch den Bolzen 56 und die Hülse 104. Wird der Hydraulikzylinder 48 ausgefahren, bewegt sich dieser Anlenkpunkt auf einem Kreisbogen um die Längsmittenachse der Hülse 104, die die Schwenkachse des Getriebegehäuses 46 bildet, so daß sich der Anlenkpunkt von dieser Ebene nach unten entfernt. Infolge dieser Bewegung schwenkt das Getriebegehäuse 46 nach unten und hebt somit das Achsrohr 62 an. Da die Steuerung der Hydraulikzylinder 48 so gewählt ist, daß der Hydraulikzylinder 48 der einen Seite der Erntemaschine 10 einfährt, wenn der auf der anderen Seite ausfährt, wird die Erntemaschine 10 um ihre Längsmittenachse gekippt, so daß die darin enthaltenen Komponenten, z. B. Siebe 34, mehr oder weniger waagrecht gestellt werden. In der eingefahrenen Stellung des Hydraulikzylinders 48 kann der Dorn 114 oder das Gußauge 96 an der Unterseite der äußeren Wand 54 anliegen, wodurch die Last der Erntemaschine 10 auf dem Dorn 114 alleine ruht, während der Hydraulikzylinder 48 entlastet ist.

Nach alledem ergibt sich, daß das Getriebegehäuse 46 mittels der an seinem zweiten Teil 68 befestigten Hülse 104 vertikal schwenkbar in dem Schwenklager 58 gelagert ist, und sich der Schwenkweg des Laufrades 12 bzw. der erzielbare Höhenversatz nach dem Abstand zwischen der Längsmittenachse der Ausgangswelle 72 und der Eingangswelle 70 richtet. Es ist ferner ersichtlich, daß eine andere Untersetzung oder ein anderer Abstand zwischen den beiden Längsmittenachsen durch den alleinigen Austausch des inneren zweiten Teils 68 des Getriebegehäuses 46 erreichbar ist, da nach der dargestellten Ausführungsform die Lagerung der Eingangswelle 70 nur in dem inneren, zweiten Teil 68 erfolgt. Desgleichen kann aus der Hangerntemaschine eine Erntemaschine zum Einsatz in der Ebene dadurch erreicht werden, daß der innere, zweite Teil 68 direkt und starr an dem Achsrohr 62 angebracht wird oder durch einen Teil ersetzt wird, der alleinig hierfür ausgebildet ist.

## Patentansprüche

1. Erntemaschine (10) mit einer Hangausgleichsvorrichtung (42) mit einem Schwenklager (44), einem Getriebegehäuse (46) und einem Hydraulikzylinder (48), wobei:
a) das Schwenklager (44) an einem Rahmen (22) oder einem Achsrohr (62) der Erntemaschine (10), insbesondere eines Mähdreschers, befestigt ist und eine Büchse (58) mit einer Lagerachse aufweist, die quer zur Fahrtrichtung verläuft,
b) das Getriebegehäuse (46) aus einem ersten und einem zweiten Teil (66, 68) besteht, die an einer im wesentlichen vertikal und in der Fahrtrichtung verlaufenden Trennebene miteinander verbunden sind, wobei:
i) der dem Schwenklager (44) zugelegene zweite Teil (68) des Getriebegehäuses (46) eine in der Büchse (58) rotierbare Hülse (104) und einen Dorn (114) aufweist,
ii) die Hülse (104) konzentrisch zu einer in dem Getriebegehäuse (46) gelagerten Eingangswelle (70) verläuft,
iii) die Eingangswelle (70) parallel zu einer mit einem Laufrad (12) verbundenen Ausgangswelle (72) verläuft,
iv) der Dorn (114) eine parallel zu der Lagerachse verlaufende Schwenkachse für den Hydraulikzylinder (48) bildet und
c) die Anschlußstelle des Hydraulikzylinders (48) an dem Rahmen (22) quer zur Fahrtrichtung betrachtet seitlich der Büchse (58) und in einer derartigen Höhe angeordnet ist, dass die Lage des Hydraulikzylinders (48) mehr horizontal als vertikal ist.

2. Erntemaschine nach Anspruch 1, **dadurch gekennzeichnet, daß** der zweite Teil (68) des Getriebegehäuses (46) Ausnehmungen (92 und 98) zur form- und/oder reib-schlüssigen Aufnahme der Hülse (104) und/oder des Dorns (114) aufweist.

3. Erntemaschine nach Anspruch 1 oder 2, **dadurch gekennzeichnet, daß** die Hülse (104) in einer als Sackbohrung ausgebildeten Ausnehmung (92) des zweiten Teils (68) aufgenommen und mittels Schrauben (108) gesichert ist.

4. Erntemaschine mit Hangausgleich nach einem oder mehreren der vorherigen Ansprüche, **dadurch gekennzeichnet, daß** die Hülse (104) an den zweiten Teil (68) angegossen oder ausgeschmiedet ist.

5. Erntemaschine nach einem oder mehreren der vorherigen Ansprüche, **dadurch gekennzeichnet, daß** der zweite Teil (68) einen über den ersten Teil (66) hinausreichenden Ansatz (84) aufweist, in dem die Eingangswelle (70) gelagert ist.

6. Erntemaschine nach einem oder mehreren der vorherigen Ansprüche, **dadurch gekennzeichnet, daß** der zweite Teil (68) einen über den ersten Teil (66) hinausreichenden Ansatz (84) aufweist, in dem der Dorn (114) zum Anschluß des Hydraulikzylinders (48) angeordnet ist.

## Claims

1. A harvesting machine (10) with a slope compensation arrangement (42) with a pivot bearing (44), a gearbox housing (46) and a hydraulic cylinder (48), wherein:
a) the pivot bearing (44) is fixed on a frame (22) or an axle tube (62) of the harvesting machine (10), especially a combine harvester, and comprises a bush (58) with a bearing axis which runs transverse to the direction of travel,
b) the gearbox housing (46) consists of first and second parts (66, 68) which are joined together at a parting plane running substantially vertically and in the direction of travel, wherein:
i) the second part (68) of the gearbox housing (46) facing the pivot bearing (44) comprises a sleeve (104) which can rotate in the bush (58) and a pin (114),
ii) the sleeve (104) runs concentric with an input shaft (70) journalled in the gearbox housing (46),
iii) the input shag (70) runs parallel to an output shaft (72) connected to a running wheel (12),
iv) the pin (114) forms a pivotal axis for the hydraulic cylinder (48) running parallel to the bearing axis and
c) the point of attachment of the hydraulic cylinder (48) to the frame (22) is arranged, as viewed transverse to the direction of travel, to the side of the bush (58) and at such a height that the lie of the hydraulic cylinder (48) is more horizontal then vertical.

2. A harvesting machine according to claim 1, **characterized in that** the second part (68) of the gearbox housing (46) has recesses (92 and 98) for positively engaging and/or frictional reception of the sleeve (104) and/or the pin (114).

3. A harvesting machine according to claim 1 or 2, **characterized in that** the sleeve (104) is received in a recess (92) of the second part (68) in the form of a blind bore and is secured by means of screws (108).

4. A harvesting machine with slope compensation according to one or more of the preceding claims, **characterized in that** the sleeve (104) is cast or forged on to the second part (68).

5. A harvesting machine according to one or more of the preceding claims, **characterized in that** the second part (68) comprises a projection (84) extending beyond the first part (66), in which the input shaft (70) is journalled.

6. A harvesting machine according to one or more of the preceding claims, **characterized in that** the second part (68) comprises a projection (84) extending beyond the first part (66), in which the pin (114) for attachment of the hydraulic cylinder (48) is disposed.

## Revendications

1. Machine à récolte (10) avec un dispositif de compensation pour le travail sur pente (42), avec un palier pivotant (44), une boîte de vitesses (46) et un vérin hydraulique (48), où :
a) le palier pivotant (44) est fixé sur un cadre (22) ou un tube d'essieu (52) de la machine à récolte (10), en particulier d'une moissonneuse-batteuse, et présente un coussinet (58) avec un axe de palier qui est placé transversalement au sens du déplacement,
b) la boîte de vitesses (46) est composée d'une première et d'une deuxième partie (66, 68) qui sont raccordées entre elles dans un plan de séparation disposé essentiellement verticalement et dans le sens du déplacement, où
i) la deuxième partie (68) de la boîte de vitesses (46) adjointe au palier pivotant (44) présente une douille (104) tournant dans le coussinet (58) et un tourillon (114),
ii) la douille est concentrique à un arbre d'entrée (70) reposant dans la boîte de vitesses (46),
iii) l'arbre d'entrée (70) est parallèle à un arbre de sortie (72) raccordé à une roue de roulement (12),
iv) le tourillon (114) forme un axe pivotant du vérin hydraulique (48) disposé parallèlement à l'axe de palier et
c) l'emplacement de raccordement du vérin hydraulique (48) est disposé sur le cadre (22) sur le côté de la douille (58) quand on regarde transversalement au sens du déplacement et à une hauteur telle que la position du vérin hydraulique (48) est davantage horizontale que verticale.

2. Machine à récolte selon la revendication 1, **caractérisée en ce que** la deuxième partie (68) de la boîte de vitesses (46) présente des évidements (92 et 98) pour le logement, par engagement positif ou par frottement, de la douille (104) et/ou du tourillon (114).

3. Machine à récolte selon la revendication 1 ou 2, **caractérisée en ce que** la douille (104) est logée dans un évidement (92), réalisé sous forme de trou borgne, de la deuxième partie (68) et est bloquée au moyen de vis (108).

4. Machine à récolte avec compensation pour le travail sur pente selon une ou plusieurs des revendications précédentes, **caractérisée en ce que** la douille (104) est coulée ou forgée sur la deuxième partie (68).

5. Machine à récolte selon une ou plusieurs des revendications précédentes, **caractérisée en ce que** la deuxième partie (68) présente un épaulement (84), dépassant la première partie (66), dans lequel repose l'arbre d'entrée (70).

6. Machine à récolte selon une ou plusieurs des revendications précédentes, **caractérisée en ce que** la deuxième partie (68) présente un épaulement (84), dépassant la première partie (66), dans lequel est disposé le tourillon (114) pour le raccordement du vérin hydraulique (48).
